# EUROPEAN PATENT SPECIFICATION

(11) **EP 3 175 996 B1**
(45) Date of publication and mention of the grant of the patent: **25.12.2019**
(21) Application number: 15827987.7
(22) Date of filing: 30.07.2015
(51) Int. Cl.: C09K 11/02, C09K 11/64, B42D 25/36

(54) **LIGHT EMITTING SHEET AND FORGERY PREVENTING MEDIUM**
LICHTEMITTIERENDE FOLIE UND FÄLSCHUNGSSICHERES MEDIUM
FEUILLE D'ÉMISSION DE LUMIÈRE ET SUPPORT DE PRÉVENTION DE CONTREFAÇON

(30) Priority: 01.08.2014 JP 2014157344; 19.08.2014 JP 2014166894; 26.09.2014 JP 2014196590; 26.09.2014 JP 2014196591; 26.09.2014 JP 2014196592
(43) Date of publication of application: 07.06.2017
(73) Proprietor: Dai Nippon Printing Co., Ltd., Tokyo 162-8001 (JP)
(72) Inventor: SATO, Jun, Tokyo 162-8001 (JP); DANJOH, Kohtaroh, Tokyo 162-8001 (JP)
(74) Representative: Müller-Boré & Partner Patentanwälte PartG mbB
(86) International application number: PCT/JP2015/071620
(87) International publication number: WO 2016/017742

(56) References cited:
- WO-A1-2014/050479
- JP-A- 2004 170 308
- JP-A- 2006 036 887
- JP-A- 2007 055 144
- US-A1- 2004 135 121
- US-A1- 2009 286 076

## Description

### [Technical Field]

The present disclosure relates to a luminescent sheet and a forgery prevention medium containing a stress-luminescent material.

### [Background Art]

Stress-luminescent materials emitting light due to stress have been variously developed for practical use (see Patent Literatures 1 and 2). Particularly, it has been studied to apply the stress-luminescent materials to forgery prevention mediums such as bills and securities requiring prevention of forgery.

Further, the United States plan a legislation for providing a forgery prevention function to the packages of medicines, and other countries may possibly make it obligatory to provide a similar function to the packages of medicines.

### [Citation List]

### [Patent Literature]

[Patent Literature 1] JP-A No. 2007-55144 (Kokai)
[Patent Literature 2] JP-A 2003-253261 (Kokai)

WO 2014/050479 A1 discloses a sheet-shaped extensible organic base material, in which a mechano-luminescent section which comprises both a mechanoluminescent body and a resin material is formed in a region in an extensible polymer matrix in an integrated state, and the surface shape of the mechanoluminescent section or the projected shape thereof as obtained by taking the surface of the extensible organic base material as a projecting plane is solid, linear or annular.

### [Summary of Invention]

### [Technical Problem]

Generally, the amount of light emitted by the stress-luminescent materials increases as stress to be applied becomes greater, but a desired amount of light may be possibly not emitted when the direction of applied stress is different. Thus, it is essentially desirable that an optimum amount of light is emitted depending on the assumed direction of stress to be applied, but concrete structures for that purpose have not been proposed in the past.

Further, the stress-luminescent materials have been used for general purposes. It is possible to provide a function of preventing forgery by embedding a secret image etc. using the stress-luminescent materials so that the embedded image appears only when stress is applied. However, this function may possibly be imitated relatively easily.

To prevent forgery, it is desirable to make it hard to recognize the existence of the stress-luminescent materials used in a target. Further, it is desirable to make it hard to imitate how to emit light by changing the intensity and area of light emitted when stress is applied, depending on locations.

The present disclosure has been made to solve the above problems, and an object thereof is to provide a luminescent sheet and a forgery prevention medium having an excellent light emission performance and capable of preventing forgery.

### [Solution to Problem]

In order to solve the above problems, one aspect of the present disclosure provides a luminescent sheet as defined in claim 1.

The first base material layer may contain a stress-luminescent material, and the stress-luminescent part may be provided in the first base material layer.

At least one of the recesses and projections may be hollow.

At least one of the recesses and projections are filled with a filler containing a stress-luminescent material, and the stress-luminescent part may be provided in the filler.

A second base material layer stacked on the first base material layer may be further provided, the second base material layer may contain a stress-luminescent material, and the stress-luminescent part may be provided in the second base material layer.

At least one of the recesses and projections has a plurality of planes, each having a different normal direction, and the edge may be a junction of two planes contacting with each other among the planes.

A cross-sectional area of each of them in a direction of a plane of the first base material layer in at least one of the recesses and projections changes continuously or gradually in a normal direction of the plane of the first base material layer.

The recess may be arranged from a principal plane of the first base material layer in a depth direction of the first base material layer, and the recess may have a radial size of 10 to 100 µm on the principal plane.

The recess may be arranged from a principal plane of the first base material layer to a depth which does not penetrate the first base material layer.

The recess may be arranged to penetrate two facing principal planes of the first base material layer.

The recess may be arranged in the first base material layer so as not to contact with both of two facing principal planes of the first base material layer.

The stress concentrated part may have a region where a stress concentration factor α with respect to the external load is 2 or greater.

Another aspect of the present disclosure provides a forgery prevention medium as defined in claim 13.

### [Advantageous Effects of Invention]

The present disclosure can provide a luminescent sheet and a forgery prevention medium having an excellent light emission performance and capable of preventing forgery.

### [Brief Description of Drawings]

[Fig. 1] A perspective diagram of a luminescent sheet according to a first embodiment of the present disclosure.
[Fig. 2] A plane view of the luminescent sheet seen from above (in the Z-direction).
[Fig. 3A] A diagram showing a modification example of a recess/projection.
[Fig. 3B] A diagram showing a modification example of a recess/projection.
[Fig. 4] A perspective diagram showing an example of forming projections upward from the front surface of a first base material layer.
[Fig. 5] A perspective diagram of the luminescent sheet 1 according to a second embodiment of the present disclosure.
[Fig. 6] A plane view of the luminescent sheet of Fig. 5 seen from above (in the Z-direction).
[Fig. 7] A perspective diagram showing an example of forming projections downward from the back surface of the first base material layer.
[Fig. 8] A perspective diagram of the luminescent sheet 1 according to a third embodiment of the present disclosure.
[Fig. 9] A plane view of the luminescent sheet of Fig. 8 seen from above (in the Z-direction).
[Fig. 10] A perspective diagram of the luminescent sheet according to a fourth embodiment of the present disclosure.
[Fig. 11] A plane view of the luminescent sheet of Fig. 10 seen from above (in the Z-direction).
[Fig. 12] A perspective diagram showing an example of providing recesses in the first base material layer.
[Fig. 13] A perspective diagram of the luminescent sheet 1 according to a fifth embodiment of the present disclosure.

### [Description of Embodiments]

Hereinafter, embodiments of the present disclosure will be explained in detail.

### (First Embodiment)

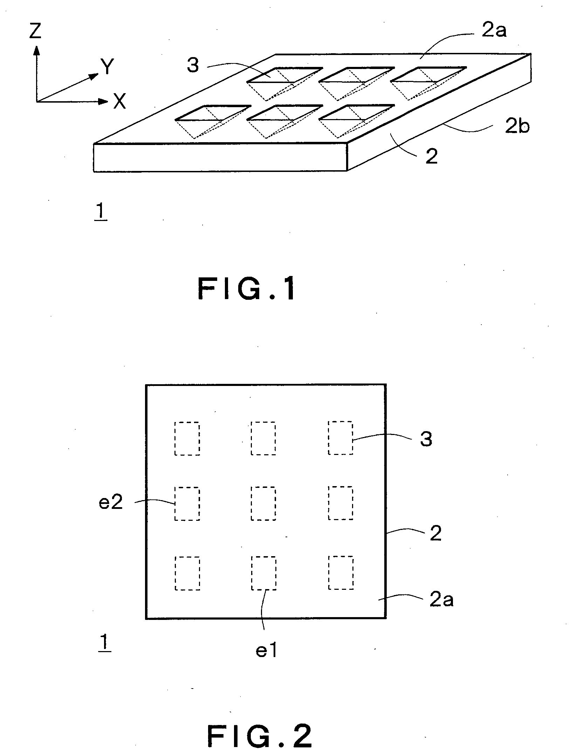

Fig. 1 is a perspective diagram of a luminescent sheet 1 according to a first embodiment of the present disclosure, and Fig. 2 is a plane view of the luminescent sheet 1 seen from above (in the Z-direction). The luminescent sheet 1 of Fig. 1 has a first base material layer 2 and a plurality of recesses 3 formed on a front surface 2a of this first base material layer 2. Here, the "front surface 2a" indicates the top surface of the luminescent sheet 1 or the surface seen from an observer. In the present description, the surface opposite to the "front surface 2a" is called a "back surface 2b."

The recesses 3 are formed from the front surface 2a of the first base material layer 2 in the depth direction of the first base material layer 2. A concrete shape of the recess 3 is not particularly questioned. In the example shown in Fig. 1, the recess 3 has a triangular cross section in the X-direction, a rectangular cross section in the Y-direction, and a rectangular planar shape when seen in the Z-direction. The recesses 3 are not necessarily required to have the same shape and size. Note that it is desirable that the recesses 3 have a size which does not allow a person to recognize the existence of the recesses 3 when he/she touches the front surface 2a of the luminescent sheet 1 with his/her fingers. By making it impossible to recognize the existence of the recesses 3, it becomes difficult to grasp the internal structure of the luminescent sheet 1, by which forgery can be prevented. The size of a side and depth of the recess 3 is desirably about 10 to 100 µm, for example. Note that when there is no need to consider prevention of forgery, the recess 3 to be formed may have a size of 100 µm or greater.

The first base material layer 2 is formed using e.g. a resin layer. The resin layer can be formed using various types of thermoplastic resins, thermosetting resins, or ionizing radiation curing resins. The resin layer may contain a stress-luminescent material so that the first base material layer 2 has a function of stress-luminescence.

Instead, the whole of the first base material layer 2 may be made of a stress-luminescent material. In this case, the stress-luminescent material may use a material obtained by baking e.g. Eu-added SrAl₂O₄ (SAOE) already known as a material which causes twinning pseudoelastic deformation by stress near the thermo-elastic martensitic transformation point. Instead, the first base material layer 2 may be formed by adding fine particles obtained by e.g. grinding SAOE to the above resin layer.

The first base material layer 2 is not necessarily required to be transparent. Since the recesses 3 are formed on the front surface 2a of the first base material layer 2, light from the edges of the recesses 3 can be emitted from the front surface 2a of the first base material layer 2 even when the first base material layer 2 is colored. Note that in order to increase light-emitting intensity, it is desirable to increase the transparency of the first base material layer 2 or select a whitish bright color having excellent reflection characteristics for the first base material layer 2. Here, "transparent" means that transmitting light at the emission wavelength of the stress-luminescent material.

The stress-luminescent material contained in the first base material layer 2 may have a basic structure obtained by inserting alkali metal ions and/or alkaline-earth metal ions into the space of a host crystal composed of a plurality of polyhedral molecules, for example. Rare-earth metal ions such as europium (Eu) can be used as a main stress-luminescent material for emitting light.

Note that any material can be used as the stress-luminescent material as it emits light depending on stress, and a concrete material should not be limited to the above. The luminescent color can be changed by changing the type of the stress-luminescent material, and thus it is desirable to select a material realizing a desired luminescent color. Further, the light emitted by the stress-luminescent material does not necessarily have a wavelength within a visual light range. Selecting an appropriate material makes it possible to emit light having a wavelength beyond the visual light range, such as ultraviolet light and infrared light. For example, in order to improve the performance of forgery prevention, it is possible to emit light having a wavelength beyond the visual light range so that the emitted light is invisible with human eyes.

It is also suitable to perform surface treatment on the first base material layer 2 to improve the water resistance of the first base material layer 2. This surface treatment is accomplished by dissolving an arbitrary amount of surface treatment agent at room temperature or after warmed in an arbitrary organic solvent (organic solvent), adding an arbitrary amount of above-stated stress-luminescent to the solution for any purpose, stirring the solution for an arbitrary length of time using an arbitrary stirring device such as a dissolver and a mixer, and drying the solution under arbitrary conditions. At this time, it is required to set the conditions to keep (not to break) the shape of the stress-luminescent material. Further, it is further preferable to adjust the water content of the organic solvent, and the water content should be less than 0.5%. When the water content is 0.5% or greater, luminescence characteristics of the stress-luminescent material deteriorate due to the moisture in the solution.

Further, in order to further improve the water resistance, it is also suitable to previously coat the surface of the stress-luminescent material to be added to the above solution using a waterproof silica layer etc. The thickness of this coat is set to 0.1 µm to 10 µm.

The recesses 3 can be formed on the front surface 2a of the first base material layer 2 by e.g. baking a baking material (SAOE dispersed resin) containing SAOE as the stress-luminescent material of the first base material layer 2 and low-molecular-weight resin previously arranged corresponding to the locations of the recesses 3, and sintering SAOE while burning up the resin in the recesses 3. Instead, the recesses 3 may be physically formed on the front surface 2a of a baked SAOE sheet by using a cutting apparatus such as laser.

When there are a plurality of recesses 3 on the front surface 2a of the first base material layer 2 as shown in Fig. 1, edges of the recesses 3 are subject to the greatest stress when the first base material layer 2 is bent or the front surface 2a of the first base material layer 2 is pressed. More concretely, stress is applied around the lines of planes on the recess 3. The planes on the recess 3 are different from each other in their normal directions, and each line between the planes serves as an edge. At least a part of the edges becomes a stress concentrated part where stress concentrates. The stress is not evenly applied to all of the edges of the recess 3, and the stress is differently applied depending on the direction in which the first base material layer 2 is bent or pressed. In the present description, a part of the edges of the recess 3 where stress concentrates when stress is added to the luminescent sheet 1 in a predetermined direction is called a stress concentrated part.

In this way, providing a plurality of recesses 3 on the front surface 2a of the first base material layer 2 makes it possible to concentrate stress particularly around the edges of the recesses 3, by which the light-emitting intensity of the stress-luminescent material around the edges becomes particularly large. A stress concentration factor α in the stress concentrated part of the recess 3 is equal to or greater than 5 (= maximum stress (σₘₐₓ)/plane stress (σ₀).) The stress concentrated part emits light having a wavelength (green) of 520 nm for example, and this light passes through the inside of the first base material layer 2 to be emitted from the front surface 2a.

When applying a load of about several M pascals to the luminescent sheet 1 according to the present embodiment in a direction perpendicular to the surface of the sheet or in a direction of twisting the surface of the sheet, light emitted in the stress concentrated part (10 mcd/cm² or greater, preferably 100 mcd/cm²) has a brightness far beyond a visible level (1 mcd/cm² or greater), and the light passes through the sheet and can be watched on the surface of the sheet.

Particularly, the recess 3 having the shape shown in Fig. 1, a plurality of planes are connected to one line (edge) at the deepest part. Stress concentrates most at this edge. Thus, when applying stress to the first base material layer 2 in the extending direction of this edge, strong light is emitted around this edge. In the present description, the part where light is emitted by the stress in the stress concentrated part is called a stress-luminescent part. In the case of Fig. 1, the stress-luminescent part corresponds to the first base material layer 2 or the filler filling the recesses 3.

As shown in Fig. 2, the recess 3 of Fig. 1 has a rectangular planar shape when seen in the Z-direction. For example, when applying stress to the first base material layer 2 in the extending direction of an edge e1 of the recess 3 of Fig. 1, stress concentrates at the edge e1 and the strongest light is emitted around the edge e1. Further, when applying stress to the first base material layer 2 in the extending direction of an edge e2 of the recess 3 of Fig. 1, stress concentrates at the edge e2 and the strongest light is emitted around the edge e2. In this way, the location where strong light is emitted changes depending on the direction of stress applied to the luminescent sheet 1.

The recess 3 may have an arbitrary shape, and particularly strong light can be emitted around a specific edge of the recess 3 by applying stress to the first base material layer 2 along the edge of the recess 3.

The present embodiment is based on an assumption that light is emitted around the edge of the recess 3, and thus the recess 3 may be filled with a resin layer containing the stress-luminescent material, instead of making the first base material layer 2 contain the stress-luminescent material. This makes it possible to reduce the amount of stress-luminescent material to be used and component cost, compared to the case of making the first base material layer 2 contain the stress-luminescent material.

Note that when the recess 3 is filled with a resin layer etc., it is desirable that the resin layer in the recess 3 has an elastic modulus different from that of the resin layer of the first base material layer 2. When the same elastic modulus is used, there is a likelihood that stress concentration level at the edge of the recess) 3 becomes low due to the stress evenly applied.

On the other hand, when the first base material layer 2 contains the stress-luminescent material, the recess 3 may be hollow. Even when the recess 3 is hollow, stress concentrates at the edge of the recess 3 in the first base material layer 2, and thus light-emitting intensity at the edge can be increased by the stress-luminescent material contained in the first base material layer 2.

As stated above, when any stress is applied to the first base material layer 2, the recesses 3 provided on the front surface 2a of the first base material layer 2 make it possible to concentrate stress at the edge of the recess 3 and to emit particularly bright light around the edge. When this principle is utilized to peculiarize the array of a plurality of recesses 3 on the front surface 2a of the first base material layer 2 so that the edges of a plurality of recesses 3 form a specific shape, light can be emitted to express desired image, character, symbol, number, etc. As stated above, light emission can be made stronger at only a part of edges of the recesses 3 depending on the direction of stress applied to the first base material layer 2, by which light can be emitted expressing a specific shape only when stress is applied in a specific direction. This light emission to express a specific shape is realized only when stress is applied in a specific direction, by which secret information can be expressed by the light emitted to express a specific shape. In this way, secret information can be embedded in the first base material layer 2 using the recesses 3, by which the luminescent sheet 1 according to the first embodiment can be utilized as a forgery prevention medium.

Note that when the recesses 3 are hollow, there is a likelihood that dust etc. is accumulated in the recesses 3 if the front surface 2a of the first base material layer 2 on which the recesses 3 are formed is exposed. Accordingly, the front surface 2a of the first base material layer 2 may be wholly covered with a protective layer. This prevents the recesses 3 from being exposed and improves durability. Further, covering the whole of the front surface 2a of the first base material layer 2 with a protective layer makes it possible to completely planarize the front surface 2a of the luminescent sheet 1, which makes it further difficult to recognize the existence of the recesses 3.

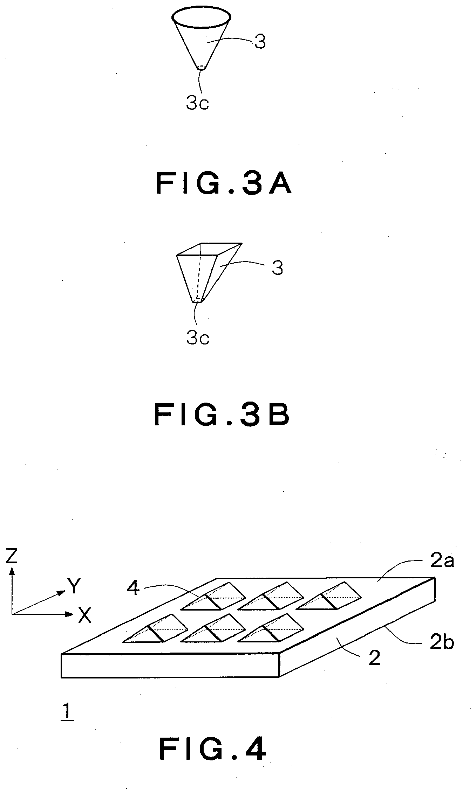

In the example shown in Fig. 1, each of the recesses 3 formed on the front surface 2a of the first base material layer 2 has a plurality of planes, but the recess 3 may have a shape like a cone and a polygonal pyramid as shown in Figs. 3A and 3B. Since stress concentrates at the deepest part 3c more easily as the area of a deepest part 3c of the recess 3 becomes smaller, it is desirable to make the area of a bottom 3b of the recess 3 smaller as much as possible as shown in Figs. 3A and 3B in order to emit stronger light.

In the example shown in Fig. 1, the recesses 3 are formed from the front surface 2a of the first base material layer 2 in the depth direction of the first base material layer 2, but the present embodiment can be applied to the case of forming projections 4 upward from the front surface 2a of the first base material layer 2, as shown in Fig. 4. Similarly to the recess 3, the projection 4 has a plurality of planes different from each other in their normal directions and the junction of two planes contacting with each other serves as an edge functioning as a stress concentrated part, by which light-emitting intensity at the edge can be increased.

The projection 4 of Fig. 4 is formed using e.g. a resin layer containing the stress-luminescent material. Accordingly, when stress is added to the luminescent sheet 1 in a predetermined direction, at least a part of the edges of the projection 4 becomes a stress concentrated part, where bright light can be emitted by the stress-luminescent material in the projection 4. Note that when the shape of the projection 4 is like a cone or a polygonal pyramid, stress concentrates at the top of the projection 4. Thus, bright light can be emitted around the top of the projection 4.

The projections 4 as shown in Fig. 4 formed on the front surface 2a of the first base material layer 2 makes it easier to recognize the existence of the projections 4 when touching them with fingers, but the existence of the projections 4 can be hardly recognized when restraining the height of the projection 4 at 10 to 100 µm while expanding the area of the top of the projection 4 or rounding the top. Instead, a protective layer may be stacked on the first base material layer 2 to cover the projections 4.

In this way, in the first embodiment, at least one of the recesses 3 and projections 4 are provided on the front surface 2a of the first base material layer 2 and the stress-luminescent material is arranged at the locations contacting with the edges of the recesses 3 and projections 4, by which stress concentrates at the edges of the recesses 3 and bright light can be emitted at the edges by the stress-luminescent material when stress is applied to the first base material layer 2. When stress is applied to the first base material layer 2 in a specific direction, the arrangement of the recesses 3 appropriately determined makes it possible to emit light expressing a specific shape via the edges of the recesses 3, which can be applied to a forgery prevention medium etc.

### (Second Embodiment)

A second embodiment is characterized in that the recesses 3 are provided on the back surface 2b of the first base material layer 2.

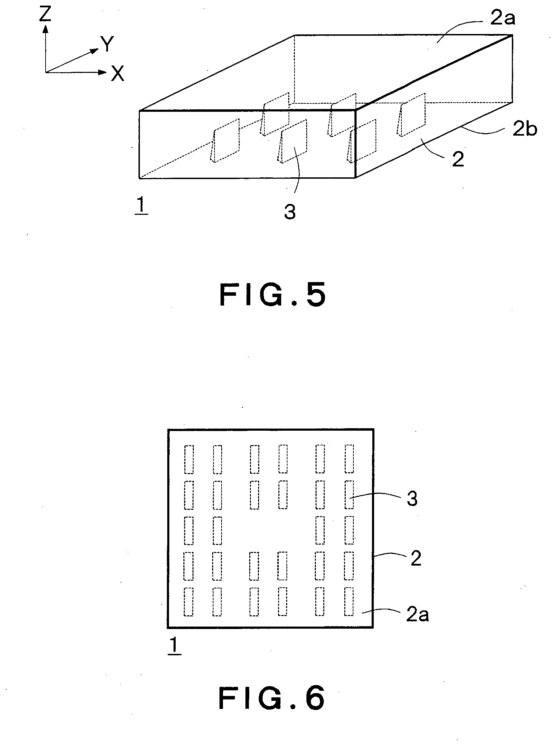

Fig. 5 is a perspective diagram of the luminescent sheet 1 according to the second embodiment of the present disclosure, and Fig. 6 is a plane view of the luminescent sheet 1 of Fig. 5 seen from above (in the Z-direction). The luminescent sheet 1 of Fig. 5 has the first base material layer 2 and a plurality of recesses 3 formed on the back surface 2b of this first base material layer 2.

The recesses 3 are formed from the back surface 2b of the first base material layer 2 to the inside of the first base material layer 2. As will be understood by comparing Fig. 6 with Fig. 2, the recesses 3 on the back surface 2b of the first base material layer 2 according to the present embodiment have a more elongate shape compared to the recesses 3 according to the first embodiment. In the present description, the elongate shape as in the recesses 3 according to the present embodiment is collectively called a slit shape.

The recess 3 of Fig. 5 has an inverted triangular cross section in the X-direction, a rectangular cross section in the Y-direction, and a rectangular planar shape in the Z-direction, but this is merely an example. The cross-sectional shape of the recess 3 in each direction can be arbitrarily determined.

The planar shape of the recess 3 of Fig. 5 when seen in the Z-direction is a slit shape more elongate than Fig. 1. The recess 3 having such an elongate slit shape makes it possible to concentrate stress at the edge of the recess 3 in the longitudinal direction when stress is applied to the first base material layer 2 in the longitudinal direction of the recess 3.

In Fig. 5, longitudinal sides of the recesses 3 are arranged in the Y-direction, and lateral sides of the recesses 3 are arranged in the X-direction. These recesses 3 are arranged so that a plurality of recesses 3 are arranged both in the X-direction and Y-direction.

When stress is applied to the first base material layer 2 in the Y-direction, stress concentrates in the longitudinal direction of a plurality of recesses 3 arranged in lines, by which bright light can be emitted linearly.

Note that the direction in which the recesses 3 are arranged can be arbitrarily determined. To emit light linearly over a long distance as much as possible, longitudinal sides of a plurality of recesses 3 should be arranged in parallel lines in a diagonal direction of the back surface 2b of the first base material layer 2.

The recesses 3 of Fig. 5 can be formed by e.g. baking a baking material (SAOE dispersed resin) containing SAOE as the stress-luminescent material of the first base material layer 2 and low-molecular-weight resin previously arranged corresponding to the locations of the recesses 3, and sintering SAOE while burning up the resin in the recesses 3. Instead, the recesses 3 may be formed on the front surface 2a of a baked SAOE sheet by using a cutting apparatus such as laser.

When the recesses 3 have an elongate slit shape as shown in Fig. 5, stress concentrates in the longitudinal direction of the recesses 3, by which light can be emitted linearly in the longitudinal direction of the recesses 3. Thus, arranging a plurality of recesses 3 in the same direction makes it possible to emit light over a long distance in a specific direction. This is suitable when displaying linear information such as a bar code. According to the present embodiment, forming a plurality of recesses 3 on the back surface 2b of the first base material layer 2 makes it possible to embed, in the first base material layer 2, secret information which appears only when stress is applied to the first base material layer 2 in a specific direction.

In Fig. 5, the recess 3 has a plurality of planes, but the shape and size of the recess 3 can be arbitrarily determined. For example, the recess 3 may have a shape like a cone or a polygonal pyramid as shown in Figs. 3A and 3B.

Similarly to the first embodiment, also in the second embodiment, the recess 3 may be hollow, or may be filled with a predetermined material (e.g., a resin layer). When the recess 3 is hollow, the first base material layer 2 must contain the stress-luminescent material.

Further, when filling the recess 3 with a resin layer etc., the stress-luminescent material should be contained in at least one of the first base material layer 2 and the filler of the recess.

Since the recesses 3 of Fig. 5 are provided on the back surface 2b of the first base material layer 2, the transparency of the first base material layer 2 must be increased to transmit light emitted at the edges of the recesses 3 to the front surface 2a of the first base material layer 2. Thus, it is desirable to form the first base material layer 2 using e.g. a transparent resin layer.

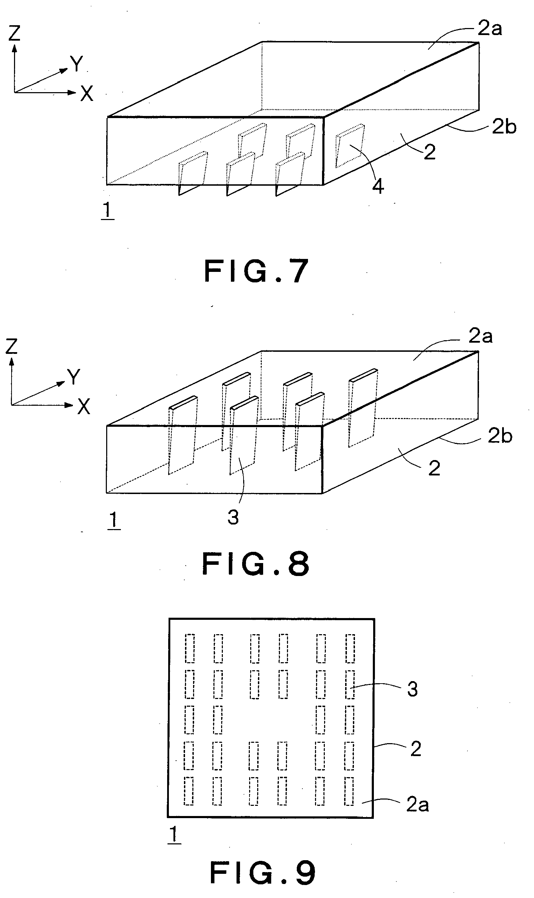

In the example shown in Fig. 5, the recesses 3 are formed from the back surface 2b of the first base material layer 2 to the inside of the first base material layer 2, but the present embodiment can be applied to the case of forming the projections 4 downward from the back surface 2b of the first base material layer 2, as shown in Fig. 7. Similarly to Fig. 4, the projection 4 of Fig. 7 is formed using e.g. a resin layer containing the stress-luminescent material. Accordingly, when stress is added to the luminescent sheet 1 in a predetermined direction, at least a part of the edges of the projection 4 becomes a stress concentrated part, where bright light can be emitted by the stress-luminescent material in the projection 4. Note that when the shape of the projection 4 is like a cone or a polygonal pyramid, stress concentrates at the top of the projection 4. Thus, bright light can be emitted around the top of the projection 4.

When the projections 4 as shown in Fig. 7 are provided on the back surface 2b of the first base material layer 2, asperities are formed on the back surface 2b of the first base material layer 2, which is an obstruction when bringing the whole of the back surface 2b of the first base material layer 2 into contact with another member. Thus, protective layers may be stacked on the back surface 2b of the first base material layer 2 to cover the projections 4 with the protective layers.

In this way, in the second embodiment, a plurality of recesses 3 having an elongate slit shape are formed on the back surface 2b of the first base material, which makes it possible to emit light in the longitudinal direction of the recesses 3 by applying stress to the first base material layer 2 in the longitudinal direction of the recesses 3 arranged in lines. Since these recesses 3 are arranged on the back surface 2b of the first base material layer 2, the existence of the recesses 3 cannot be recognized by a person touching the front surface 2a of the first base material layer 2 with his/her fingers. Further, it is also difficult to recognize the existence of the recesses 3 with eyes since the first base material layer 2 and recesses 3 are made of highly transparent materials. Thus, the recesses 3 make it possible to embed secret information in the first base material layer 2. This secret information appears only when stress is applied to the first base material layer 2 in a specific direction, and thus can be used to prevent forgery.

In the examples shown in the second embodiment, the recesses 3 having a slit shape more elongate than the first embodiment are formed on the back surface 2b of the first base material layer 2, but the recesses 3 having an elongate slit shape as in the second embodiment may be formed on the front surface 2a of the first base material layer 2. That is, the recesses 3 in the first embodiment may have an elongate slit shape. The recess 3 having an elongate slit shape is exposed within a small area on the front surface 2a of the first base material layer 2, by which stress concentrates more easily and light-emitting intensity can be improved. Further, the existence of the recesses 3 can be hardly recognized when the recesses 3 formed on the front surface 2a of the first base material layer 2 are touched with fingers.

### (Third Embodiment)

A third embodiment is characterized in that the recesses 3 penetrate the first base material layer 2 from the front surface 2a to the back surface 2b.

Fig. 8 is a perspective diagram of the luminescent sheet 1 according to the third embodiment of the present disclosure, and Fig. 9 is a plane view of the luminescent sheet 1 of Fig. 8 seen from above (in the Z-direction). The luminescent sheet 1 of Fig. 8 has the first base material layer 2 and a plurality of recesses 3 penetrating this first base material layer 2 from the front surface 2a to the back surface 2b.

The recesses 3 of Fig. 8 have an elongate slit shape similarly to Fig. 4. Thus, the plane view of Fig. 9 is the same as Fig. 5. Fig. 8 shows an example where the area of the recess 3 exposed on the front surface 2a is larger than the area of the recess 3 exposed on the back surface 2b, but the area of the recess 3 exposed on the back surface 2b may be larger than the area of the recess 3 exposed on the front surface 2a, to the contrary. Further, the cross-sectional area of the recess 3 in the plane direction may change continuously or intermittently from the front surface 2a to the back surface 2b, or may be always the same. Further, the recess 3 may extend in the normal direction of the plane, or may extend at an angle inclined to the normal direction. Further, the recess 3 may curve or diverge in the first base material layer 2. The size of the recess 3 exposed on the back surface 2b is about 10 to 100 µm.

In the example of Fig. 8, a plurality of recesses 3 are arranged in the Y-direction so that the longitudinal sides of the recesses 3 are in parallel in the Y-direction, and a plurality of recesses 3 are arranged in the X-direction so that the lateral sides of the recesses 3 are in parallel in the X-direction. Note that the direction in which the recesses 3 are arranged in the plane of the first base material layer 2 can be arbitrarily determined.

The recesses 3 of Fig. 8 can be formed by e.g. baking a baking material (SAOE dispersed resin) containing SAOE as the stress-luminescent material of the first base material layer 2 and low-molecular-weight resin previously arranged corresponding to the locations of the recesses 3, and sintering SAOE while burning up the resin in the recesses 3. Instead, the recesses 3 may be formed on the front surface 2a of a baked SAOE sheet by using a cutting apparatus such as laser.

Since the recesses 3 of Fig. 8 penetrate the first base material layer 2 from the front surface 2a to the back surface 2b, when stress is applied to the first base material layer 2, light can be emitted both on the front surface 2a of the first base material layer 2 and the back surface 2b thereof.

Note that the recess 3 may be hollow, or may be filled with a filler such as resin as explained in the first and second embodiments. When the recess 3 is hollow, the first base material layer 2 must contain the stress-luminescent material. On the other hand, when the recess 3 is filled with the filler, at least one of the first base material layer 2 and filler must contain the stress-luminescent material.

In this way, the luminescent sheet 1 according to the third embodiment have the recesses 3 penetrating the first base material layer 2 from the front surface 2a to the back surface 2b, which makes it possible to emit light both on the front surface 2a and the back surface 2b with the same light-emitting intensity.

Since the recesses 3 have an elongate slit shape, the existence of the recesses 3 can be hardly recognized when each of the front surface 2a and back surface 2b is touched with human fingers. Thus, secret information can be embedded in the first base material layer 2 by the recesses 3. That is, a plurality of recesses 3 arranged in specific positions make it possible to emit light expressing a specific shape such as image, symbol, character, number, etc. when stress is applied in a specific direction. In this way, the third embodiment also can be applied to a forgery prevention medium.

### (Fourth Embodiment)

A fourth embodiment is characterized in that the recesses 3 are formed in a net-like fashion on the front surface 2a of the first base material layer 2.

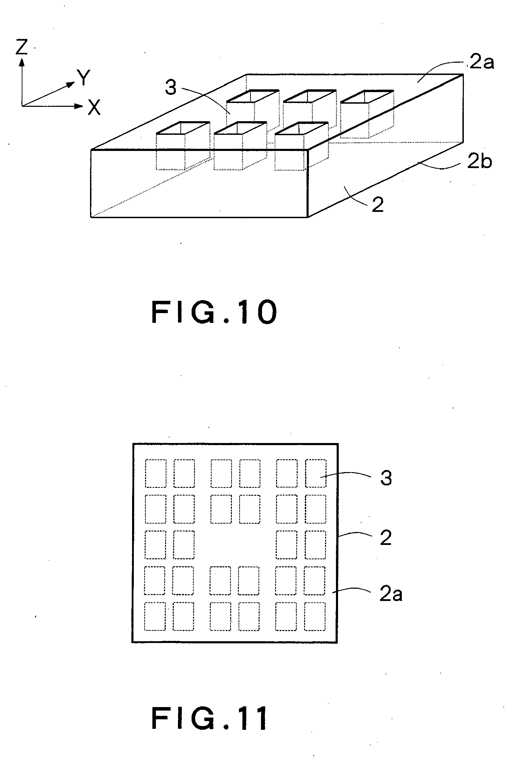

Fig. 10 is a perspective diagram of the luminescent sheet 1 according to the fourth embodiment of the present disclosure, and Fig. 11 is a plane view of the luminescent sheet 1 of Fig. 10 seen from above (in the Z-direction). The luminescent sheet 1 of Fig. 10 has the first base material layer 2 and a plurality of recesses 3 formed in a net-like fashion on the front surface 2a of this first base material layer 2.

The bottom of the recess 3 may be inside the first base material layer 2, or may be on the back surface 2b with the recess 3 penetrating the first base material layer 2.

In Fig. 10, the recess 3 has a rectangular shape, but the shape of the recess 3 should not be limited to Fig. 10. For example, the recess 3 may have another shape other than the rectangular shape, such as a polyangular shape.

When the recess 3 has a rectangular shape, the aspect ratio thereof can be arbitrarily determined. As explained in the second and third embodiments, the recess 3 may have an elongate slit shape, or may have a shape like a square.

The size of the recess 3 also can be arbitrarily determined. Note that it is desirable the size of the recess 3 should be determined so that the existence of the recesses 3 cannot be recognized with eyes and fingers touching them. For example, it is desirable that a side of the recess 3 has a length of about 10 µm to 100 µm.

The recess 3 may be hollow, or may be filled with a predetermined material. The recess 3 is filled with a material such as a pigment dispersing resin layer. It is desirable that the color difference between the pigment dispersing resin layer and the first base material layer 2 is 0.5 or less. This is because a color difference greater than 0.5 allows a person to observe that the recesses 3 are arranged in a net-like fashion on the first base material layer 2. When the first base material layer 2 is white, a white resin having the same color tone is used as the pigment dispersing resin layer. Further, it is desirable that the refractive index difference between the first base material layer 2 and the pigment dispersing resin layer is 0.1 or less. This is because a refractive index difference greater than 0.1 may possibly allow a person to observe that the recesses 3 are arranged, due to the light refracted at the interfaces of the recesses 3.

Further, when the ratio of the Young's modulus of the first base material layer 2 (having a Young's modulus of about 200 GPa) to the pigment dispersing resin layer (having a Young's modulus of about 2 GPa) is set to 10/1 to 1000/1, stress can be concentrated at the edges of the recesses 3.

As the angle between the planes of the recess 3 becomes smaller, greater stress concentrates at this part, and the stress concentration factor α is set to 2 or greater, preferably 5 or greater than. When applying a load of about several M Pa to the luminescent sheet 1 according to the present embodiment in a direction perpendicular to the surface of the sheet or in a direction of twisting the surface of the sheet, light emitted in the stress concentrated part (10 mcd/cm² or greater, preferably 100 mcd/cm²) has a brightness far beyond a visible level (1 mcd/cm² or greater).

The net-like recesses 3 can be formed on the front surface 2a of the first base material layer 2 by e.g. baking a baking material (SAOE dispersed resin) containing SAOE as the stress-luminescent material of the first base material layer 2 and low-molecular-weight resin previously arranged corresponding to the locations of the recesses 3, and sintering SAOE while burning up the resin in the recesses 3. Instead, the recesses 3 may be formed on the front surface 2a of a baked SAOE sheet by using a cutting apparatus such as laser.

Note that when the recesses 3 are hollow, there is a likelihood that the recesses 3 are colored due to a foreign object (e.g. dust) entering the recesses 3. Accordingly, the front surface 2a of the first base material layer 2 may be covered with a protective layer having a high transparency without deteriorating light scattering characteristics. It is desirable that the protective layer is made of a material capable preventing detachment caused by the fatigue due to the stress repeatedly loaded, such as a rubber-like member having a high bending resistance.

In this way, in the fourth embodiment, the recesses 3 are arranged in a net-like fashion on the first base material layer 2, which makes it possible to emit light linearly at the edges of certain recesses 3 when stress is applied to the luminescent sheet 1 in the X-direction or Y-direction shown in Fig. 10. Further, arranging the recesses 3 in a net-like fashion on a part of a first substrate makes it possible to emit light expressing a specific shape such as image, character, symbol, number, etc.

Further, the size of the recesses 3 is determined to make it impossible to recognize the recesses 3 when touching them with fingers, and there is no difference between the recesses 3 and the first base material layer 2 both in color and refractive index difference to make it impossible to see the recesses 3. Thus, secret information can be embedded in the first base material layer 2 by using the recesses 3. Accordingly, the luminescent sheet 1 in the present embodiment can be utilized to prevent forgery.

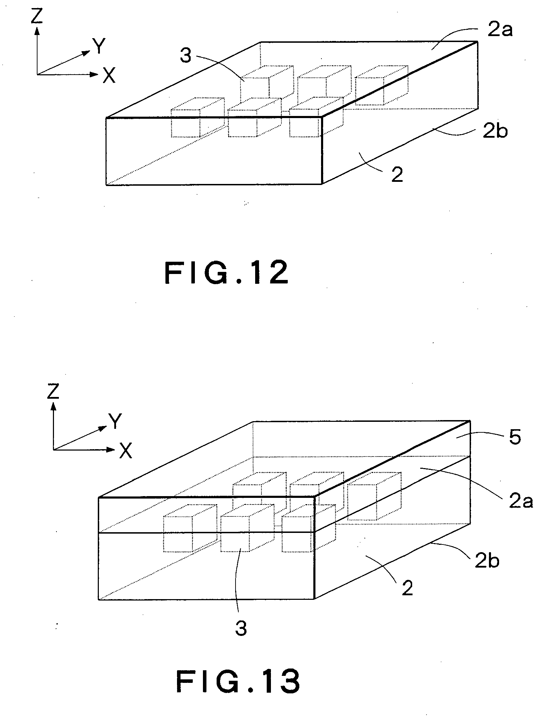

In the examples shown in the above first to fourth embodiments, the recesses 3 or projections 4 are formed from the front surface 2a of the first base material layer 2 or from the back surface 2b, but the recesses 3 may be formed in the first base material layer 2 so that the recesses 3 do not contact with either of the front surface 2a and back surface 2b of the first base material layer 2, as shown in Fig. 12.

### (Fifth Embodiment)

A fifth embodiment is characterized in that the luminescent sheet 1 has a two-layered structure.

Fig. 13 is a perspective diagram of the luminescent sheet 1 according to the fifth embodiment of the present disclosure. The luminescent sheet 1 of Fig. 13 has the first base material layer 2 and a second base material layer 5 stacked on this first base material layer 2.

Similarly to the first base material layer 2 in the first to fourth embodiments explained above, the first base material layer 2 has a plurality of recesses 3 on the front surface 2a. The bottom of the recess 3 may be inside the first base material layer 2, or may be on the back surface 2b with the recess 3 penetrating the first base material layer 2. The recess 3 may have various shapes as explained in the first to fourth embodiments.

In the present embodiment, the surface of the recesses 3 are covered with the second base material layer 5, which eliminates the likelihood that the surface of the recesses 3 are touched by fingers. Thus, the size of the recesses 3 may be set larger than that of the recesses 3 in the first to fourth embodiments.

The recess 3 may be hollow. When the recess 3 is hollow, the second base material layer 5 contains the stress-luminescent material.

When the recess 3 is hollow and the top surface of the second base material layer 5 is pushed with a predetermined pressing force in the stacking direction, the second base material layer 5 is pushed into the recess 3 and stress concentrate at the edge of the recess 3, by which light emits around the edge of the recess. Each of the first base material layer 2 and second base material layer 5 containing the stress-luminescent material makes it possible to emit light around the edge of the recess 3 by the stress concentrating at the edge of the recess 3.

The material of the first base material layer 2 and second base material layer 5 may be basically similar to that of the first base material layer 2 in the first to fourth embodiments. It is desirable that the second base material layer 5 contains the stress-luminescent material when the recess 3 is hollow, but whether the first base material layer 2 contains the stress-luminescent material or not can be arbitrarily determined.

It is desirable that the second base material layer 5 has a certain level of elasticity. This is because the second base material layer 5 pushed into the recess 3 when the top surface of the second base material layer 5 is pressed makes it possible to concentrate stress at the edge of the recess 3.

Further, the recess 3 may be filled with a material having an elastic modulus lower than that of the first base material layer 2, instead of being hollow. In this case, the low-modulus material in the recess 3 bends easier than the first base material layer 2, and the second base material layer 5 pushes the low-modulus material in the recess 3 when the top surface of the second base material layer 5 is pressed. This makes it easier to concentrate stress at the edge of the recess 3.

The recesses 3 may be filled with the low-modulus material by filling the recesses 3 with the low-modulus material after those are formed on the first base material layer 2, or by forming a plurality of layers made of the low-modulus material and then forming the first base material layer 2 cover the layers through print processing.

Since the recesses 3 in the luminescent sheet 1 according to the present embodiment are covered with the second base material layer 5, the second base material layer 5 without high transparency causes the likelihood that light emitted at the edge of the recess 3 cannot be transmitted to the surface of the luminescent sheet 1. Thus, it is desirable that the second base material layer 5 is formed using e.g. a resin layer having a high transparency.

In this way, in the fifth embodiment, the second base material layer 5 is stacked on the first base material layer 2 having the recesses 3 formed thereon not to expose the recesses 3 on the surface of the luminescent sheet 1, which makes it harder to recognize the existence of the recesses. When the surface of the luminescent sheet 1 is pushed in the stacking direction, the second base material layer 5 is pushed into the recess 3 and stress concentrates at the edge of the recess 3. This makes it possible to emit light around the edge of the recess. Adjusting the number and arrangement of the recesses 3 makes it possible to emit light expressing a specific shape when stress is applied in a specific direction. Accordingly, secret information can be embedded in the first base material layer 2 by the recesses 3, which makes it possible to produce a forgery prevention medium.

Stated below are structural characteristics of the luminescent sheet 1 in a broader concept covering the first to fifth embodiments explained above. That is, the luminescent sheet 1 in a broader concept of the present disclosure has the first base material layer 2, at least one of the recesses 3 and projections 4, and stress-luminescent parts. At least one of the recesses 3 and projections 4 are formed on the first base material layer 2 and have edges. The stress-luminescent part is arranged at a location contacting with the edge. More concretely, the stress-luminescent part is provided in the first base material layer 2. Instead, the stress-luminescent part may be provided in the filler filling the recesses 3 or projections 4. At least a part of the edges has a stress concentrated part where stress concentrates when stress is added to the first base material layer in a predetermined direction. The stress-luminescent part emits light having a predetermined wavelength with a light-emitting intensity depending on external load stress added to the stress concentrated part.

In such a luminescent sheet 1, when stress is added to the first base material layer 2 in a predetermined direction, a part of the edges has a stress concentrated part where light having a predetermined wavelength can be emitted with a light-emitting intensity depending on external load stress added to the stress concentrated part.

### [Examples]

### (Example 1)

Prepared were a baking mold having hollows previously formed corresponding to the recesses each having a region where the stress concentration factor α is at least 2 or greater, and a press metal mold to form such recesses 3. This baking mold is used to form the first base material layer 2 having a size of 30 mm in length, 100 mm in width, and 10 mm in thickness. This baking mold is made from metal and the inside thereof is coated with stainless steel.

Each of the recesses 3 of the first base material layer 2 has a square opening of 3 mm × 3 mm, and the depth thereof is 2.6 mm. These recesses 3 are provided on the front surface 2a of the first base material layer 2 at 6-mm intervals on a grid.

Three-dimensional image data of the shape of the luminescent sheet 1 having such a structure was analyzed by structural analysis software. As a result, it was confirmed that the shape the formed luminescent sheet 1 has a region where the stress concentration factor α is 10.0 when the luminescent sheet 1 is curved by deforming stress load applied thereto by pulling both ends of the luminescent sheet 1 in the lateral direction to push the lateral central part of the luminescent sheet 1 from the back surface 2b to the front surface 2a.

Next, based on the three-point method for obtaining bending characteristics of plastic, the front surface 2a of the luminescent sheet 1 in this Example 1 was aimed downward, both ends thereof in the lateral direction were supported at fulcrums, and the lateral central part was pushed downward from the back surface 2b by a deforming stress of 100 kPa vertically applied to the surface of the luminescent sheet 1 as a predetermined external load, at a testing speed of 2 mm/min. As a result, the luminescent sheet 1 bended in that direction, and due to this deformation, deforming stress concentrated at a predetermined region S1 in the edge of the recess 3 in the luminescent sheet 1, and light having a predetermined wavelength (green light) was emitted from the region S1 with a light-emitting intensity depending on the deforming stress, by which light having a predetermined wavelength (green light) could be seen.

Concretely, deforming stress concentrated in a predetermined region S1 in the edge of the recess 3, and light having a predetermined wavelength (green light) was emitted from this predetermined region S1 with a light-emitting intensity depending on the deforming stress. Particularly strong light (green light) was emitted from the predetermined region S1 in the recess 3 and reflected on the side faces of the recess 3, and the light concentrated in a certain direction and the intensity thereof was increased. Accordingly, the observer could see light (green light) having the predetermined wavelength at the position of the recess 3 on the front surface 2a of the luminescent sheet 1.

Further, a stainless-steel jig having a semicircular column shape having a bottom size of 30 mm in length and 100 mm in width and a curvature radius of 60 mm was prepared, and when the luminescent sheet 1 in this Example 1 was pushed onto the curved surface of the jig with fingers as a predetermined external load to the luminescent sheet 1, the luminescent sheet 1 deformed, and green light was emitted particularly around the part corresponding to the projecting part of the jig due to the deformation. The green light could be seen with eyes and the authenticity of this luminescent sheet 1 was confirmed.

Further, operation to confirm this authenticity was repeated 100 times, and emission of green light could be similarly confirmed each time, which leaded to an assumption that it is extremely difficult to forge the luminescent sheet 1 in Example 1.

### (Example 2)

Prepared were a baking mold for the first base material layer 2 having a flat front surface 2a and the back surface 2b having the recesses 3 of a predetermined shape, and a press metal mold to form such recesses 3. The baking mold is made from metal and the inside thereof is coated with stainless steel.

In Example 2, each of the recesses 3 of the first base material layer 2 is wedge-shaped and has a square opening of 6 mm × 6 mm, and the depth thereof is 5.2 mm. Such wedge-shaped recesses 3 are alternately provided on the back surface 2b of the first base material layer 2 at 12-mm intervals on a grid.

In addition to the above, Sr₃Al₂O₆ as a base material was poured into a baking mold 2 with rectangular hollows having a size of 30 mm in length, 100 mm in width, and 10.2 mm in thickness, and 1% of Eu as a main material to emit light and 1% of boric acid were added thereto, and those were tentatively baked by being gradually heated to 900°C in a reducing atmosphere of hydrogenation argon. Then, pressure forming through 10-ton pressing is performed using the press metal mold to form the above the recesses 3, by which a tentative baking product of stress-luminescent material having the shape as shown in Fig. 5 was obtained.

The tentative baking product of the stress-luminescent material was shifted to the baking mold prepared as stated above, baked at 1300°C for four hours in a reducing atmosphere of hydrogenation argon, naturally cooled, and taken out from the baking mold, by which the first base material layer 2 having a size of 30 mm in length, 100 mm in width, and 10 mm in thickness was produced. The front surface 2a of this first base material layer 2 is flat, and the back surface 2b has the recesses 3 formed on a grid.

Then, three-dimensional image data of the shape of the luminescent sheet 1 thus produced in Example 2 was analyzed by structural analysis software. As a result, it was confirmed that the shape the formed luminescent sheet 1 has the region S1 where the stress concentration factor α is 15.0 when the luminescent sheet 1 is curved by deforming stress load applied thereto by pulling both ends of the luminescent sheet 1 in the lateral direction to push the lateral central part of the luminescent sheet 1 from the other surface to the back.

Next, based on the three-point method for obtaining bending characteristics of plastic, the back surface 2b of the luminescent sheet 1 in this Example 2 was aimed downward, both ends thereof in the lateral direction were supported at fulcrums, and the lateral central part was pushed from the back surface 2b to the front surface 2a by a deforming stress of 100 kPa applied to the surface of the luminescent sheet 1 as a predetermined external load, at a testing speed of 2 mm/min. As a result, the luminescent sheet 1 bended upward, and due to this deformation, deforming stress concentrated at a predetermined region S1 in the edge of the recess 3 in the luminescent sheet 1, and light having a predetermined wavelength (green light) was emitted from the region S1 with a light-emitting intensity depending on the deforming stress, by which light having a predetermined wavelength (green light) could be seen from the front surface 2a of the luminescent sheet 1.

Concretely, deforming stress concentrated in a predetermined region S1 in the luminescent sheet 1, and light having a predetermined wavelength (green light) was emitted from this predetermined region S1 with a light-emitting intensity depending on the deforming stress. Particularly strong light (green light) was emitted from the predetermined region S1 in the recess 3 and reflected on the side faces of the recess 3, and the light (green light) concentrated in a certain direction while increasing its intensity and passed through the luminescent sheet 1. Accordingly, the observer could see light (green light) having the predetermined wavelength on the front surface 2a of the luminescent sheet 1.

Further, a jig having a semicircular column shape having a bottom size of 30 mm in length and 100 mm in width and a curvature radius of 60 mm in its projecting part was prepared, and when the luminescent sheet 1 in this Example 2 arranged on the curved surface of the projecting part of the jig so that the other surface of the luminescent sheet 1 is brought into contact with the jig was pushed with fingers as a predetermined external load to the luminescent sheet 1, the luminescent sheet 1 deformed, and green light was emitted due to the deformation. The green light could be seen with eyes and the authenticity of this luminescent sheet 1 was confirmed.

Further, operation to confirm this authenticity was repeated 100 times, and emission of green light could be similarly confirmed each time, which leaded to an assumption that it is extremely difficult to forge the luminescent sheet 1 in Example 2.

### (Example 3)

Prepared was a baking mold having a size of 30 mm in length, 100 mm in width, and 10.2 mm in thickness and having hollows at the center thereof. Each hollow has a quadrangular column shape having top/ bottom surface of 5 mm in length and 5 mm in width, and a height of 10.2 mm. Totally 16 hollows (4 in the longitudinal direction and 4 in the lateral direction) were provided at 2-mm intervals corresponding to a partition of the baking mold made from metal and having an inside coated with stainless steel. This baking mold is used to make the luminescent sheet 1 of Fig. 8.

The luminescent sheet 1 in this Example 3 is a rectangular solid having a size of 30 mm in length, 100 mm in width, and 10.2 mm in thickness, and totally 16 recesses 3 (4 in the longitudinal direction and 4 in the lateral direction) at the center thereof. Each recess 3 has a size of 5 mm in length, 5 mm in width, and 10.2 mm in height.

In addition to the above, a composition for the stress-luminescent material obtained by adding 1% of Eu as a main material to emit light and 1% of boric acid to Sr₃Al₂O₆ as a base material completely filled the hollows of the baking mold, and was tentatively baked by being gradually heated to 900°C in a reducing atmosphere of hydrogenation argon. Further, the composition was baked at 1300°C for four hours in a reducing atmosphere of hydrogenation argon, and naturally cooled. In this way, a stress-luminescent material having a predetermined shape was produced. Then, the stress-luminescent material thus produced was taken out from the baking mold while keeping its shape, to obtain the luminescent sheet 1 which is a rectangular solid having a size of 30 mm in length, 100 mm in width, and 10.0 mm in thickness, and has 16 recesses 3 penetrating the luminescent sheet 1 from the front surface 2a to the back surface 2b and regularly arranged at regular intervals in the lateral and longitudinal directions at the center of the luminescent sheet 1.

Then, three-dimensional image data of the shape of the luminescent sheet 1 in this Example 3 was analyzed by structural analysis software. As a result, when both ends of the luminescent sheet 1 in the lateral direction was applied with external load in the direction in parallel to the surface and the back surface 2b and vertical to the both ends so that the both ends are pulled to get them away from each other, the luminescent sheet 1 deformed, and deforming stress depending on the deforming stress occurred in the luminescent sheet 1. It was confirmed that the deforming stress concentrated at the 16 recesses (regions) 3, and the stress concentration factor α at the corner of the opening (a part KS1 at which stress concentrates) was 3.3.

Next, based on Standard Test Method for Tensile Properties of Plastics (JIS K 7161-1994 (ISO 5271:1993)), when both ends of the luminescent sheet 1 in the lateral direction in this Example 3 were fixed by a gripper and a deforming stress of 100 kPa as a predetermined external load was applied to the luminescent sheet 1 so that both ends get away from each other in the direction vertical to the planes of the ends at a testing speed of 2 mm/min, the luminescent sheet 1 physically deformed extending in that direction, and the deforming stress concentrated equally at 16 recesses 3 of the luminescent sheet 1 due to the deformation. Simultaneously, light having a predetermined wavelength (green light) was emitted from the 16 recesses 3 with a light-emitting intensity depending on the deforming stress, by which light having a predetermined wavelength (green light) could be seen.

Concretely, the emitted light having a predetermined wavelength (green light) had a stronger intensity at the corner where four side faces of each of 16 recesses 3 of the luminescent sheet 1 are perpendicular to one another, and the light is emitted directly from the opening, or after being repeatedly reflected on the side faces. When the front surface of the luminescent sheet 1 and the back surface 2b thereof were observed, light having a predetermined wavelength could be seen on the 16 recesses 3 or openings arranged below.

Further, when both ends of the luminescent sheet 1 in the lateral direction in this Example 3 were held by left and right hands respectively and pulled so that both ends gets away from each other, the luminescent sheet 1 physically deformed extending in that direction, and light emission due to the deformation similarly occurred and could be seen. Further, when this operation was repeated 100 times, the light having a predetermined wavelength (green light) did not change in brightness and could be seen, which leaded to an assumption that it is extremely difficult to forge the luminescent sheet 1 in Example 3.

### [Reference Signs List]

1: Luminescent sheet, 2: First base material layer, 3: Recess, 4: projection, 5: Second base material layer

## Claims

1. A luminescent sheet comprising:
a first base material layer (2);
at least one of recesses (3) and projections (4) each having edges and formed on the first base material layer (2); and
stress-luminescent parts (3, 4) each arranged at a location contacting with the edge,
wherein at least a part of the edges comprises a stress concentrated part where stress concentrates when stress is added to the first base material layer (2) in a predetermined direction,
**characterized in that**
the stress-luminescent part (3, 4) is configured to emit, around the edge, particularly strong light having a predetermined wavelength with a light-emitting intensity depending on external load stress added to the stress concentrated part and an assumed direction of the external load stress.

2. The luminescent sheet of Claim 1,
wherein the first base material layer (2) contains a stress-luminescent material, and
the stress=luminescent part (3, 4) is provided in the first base material layer (2).

3. The luminescent sheet of Claim 1 or 2, wherein at least one of the recesses (3) and projections (4) are hollow.

4. The luminescent sheet of Claim 1 or 2,
wherein at least one of the recesses (3) and projections (4) are filled with a filler containing a stress-luminescent material, and
the stress-luminescent part (3) is provided in the filler.

5. The luminescent sheet of any of Claims 1-4, further comprising a second base material layer (5) stacked on the first base material layer (2),
wherein the second base material layer (5) contains a stress-luminescent material, and
the stress-luminescent part (3, 4) is provided in the second base material layer (5).

6. The luminescent sheet of any of Claims 1-5,
wherein at least one of the recesses (3) and projections (4) comprises a plurality of planes, each having a different normal direction, and
the edge is a junction of two planes contacting with each other among the planes.

7. The luminescent sheet of any of Claims 1-6, wherein a cross-sectional area in a direction of a plane of the first base material layer (2) in at least one of the recesses (3) and projections (4) changes continuously or gradually in a normal direction of the plane of the first base material layer (2).

8. The luminescent sheet of any of Claims 1-7,
wherein the recess (3) is arranged from a principal plane of the first base material layer (2) in a depth direction of the first base material layer (2), and
the recess (3) has a radial size of 10 to 100 µm on the principal plane.

9. The luminescent sheet of any of Claims 1-8, wherein the recess (3) is arranged from a principal plane of the first base material layer (2) to a depth which does not penetrate the first base material layer (2).

10. The luminescent sheet of any of Claims 1-8, wherein the recess (3) is arranged to penetrate two facing principal planes of the first base material layer (2).

11. The luminescent sheet of any of Claims 1-8, wherein the recess (3) is arranged in the first base material layer (2) so as not to contact with both of two facing principal planes of the first base material layer (2).

12. The luminescent sheet of any of Claims 1-11, wherein the stress concentrated part has a region where a stress concentration factor α with respect to the external load is 2 or greater.

13. A forgery prevention medium comprising the luminescent sheet of any of Claims 1-12.

## Patentansprüche

1. Ein lumineszierende Folie, die Folgendes umfasst:
eine erste Basismaterialschicht (2);
mindestens einen aus Aussparungen (3) und Vorsprüngen (4), die jeweils Kanten aufweisen und auf der ersten Basismaterialschicht (2) ausgebildet sind; und
Spannungslumineszierende Teile (3, 4), die jeweils an einer mit der Kante in Kontakt stehenden Stelle angeordnet sind,
wobei mindestens ein Teil der Kanten einen spannungskonzentrierten Teil umfasst, in dem sich die Spannung konzentriert, wenn der ersten Basismaterialschicht (2) Spannung in einer vorbestimmten Richtung hinzugefügt wird,
**dadurch gekennzeichnet, dass**
der spannungslumineszierende Teil (3, 4) konfiguriert ist, um um den Rand herum besonders starkes Licht mit einer vorbestimmten Wellenlänge und einer Lichtemissionsintensität zu emittieren, die von der dem spannungskonzentrierten Teil hinzugefügten äußeren Belastungsspannung und einer angenommenen Richtung der äußeren Belastungsspannung abhängt.

2. Die lumineszierende Folie nach Anspruch 1,
wobei die erste Basismaterialschicht (2) ein spannungslumineszierendes Material enthält, und
der spannungslumineszierende Teil (3, 4) in der ersten Basismaterialschicht (2) bereitgestellt wird.

3. Die lumineszierende Folie nach Anspruch 1 oder 2,
wobei mindestens einer aus den Aussparungen (3) und den Vorsprüngen (4) hohl sind.

4. Die lumineszierende Folie nach Anspruch 1 oder 2,
wobei mindestens einer aus den Aussparungen (3) und den Vorsprüngen (4) mit einem Füllstoff gefüllt sind, der ein spannungslumineszierendes Material enthält, und
wobei der spannungslumineszierende Teil (3) im Füllstoff bereitgestellt wird.

5. Die lumineszierende Folie nach irgendeinem der Ansprüche 1 - 4, die ferner eine zweite Basismaterialschicht (5) umfasst, die auf der ersten Basismaterialschicht (2) gestapelt ist,
wobei die zweite Basismaterialschicht (5) ein spannungslumineszierendes Material enthält, und
wobei das spannungslumineszierende Teil (3, 4) in der zweiten Basismaterialschicht (5) vorgesehen ist.

6. Die lumineszierende Folie nach irgendeinem der Ansprüche 1 - 5,
wobei mindestens einer aus den Aussparungen (3) und den Vorsprüngen (4) eine Vielzahl von Ebenen umfasst, die jeweils eine unterschiedliche Normalrichtung aufweisen, und
wobei die Kante eine Verbindung von zwei Ebenen ist, die miteinander in Kontakt stehen, unter (*among*) den Ebenen.

7. Die lumineszierende Folie nach irgendeinem der Ansprüche 1 - 6, wobei eine Querschnittsfläche in Richtung einer Ebene der ersten Basismaterialschicht (2) in mindestens einer aus den Aussparungen (3) und den Vorsprüngen (4) kontinuierlich oder graduell in einer normalen Richtung der Ebene der ersten Basismaterialschicht (2) ändert.

8. Die lumineszierende Folie nach irgendeinem der Ansprüche 1 - 7,
wobei die Aussparung (3) ausgehend von einer Hauptebene der ersten Basismaterialschicht (2) in eine Tiefenrichtung der ersten Basismaterialschicht (2) angeordnet ist, und
wobei die Aussparung (3) eine radiale Größe von 10 bis 100 µm auf der Hauptebene aufweist.

9. Die lumineszierende Folie nach irgendeinem der Ansprüche 1 - 8, wobei die Aussparung (3) ausgehend von einer Hauptebene der ersten Basismaterialschicht (2) bis zu einer Tiefe angeordnet ist, die die erste Basismaterialschicht (2) nicht durchdringt.

10. Die lumineszierende Folie nach irgendeinem der Ansprüche 1 - 8,
wobei die Aussparung (3) so angeordnet ist, dass sie zwei einander zugewandte Hauptebenen der ersten Basismaterialschicht (2) durchdringt.

11. Die lumineszierende Folie nach irgendeinem der Ansprüche 1 - 8, wobei die Aussparung (3) in der ersten Basismaterialschicht (2) so angeordnet ist, dass sie nicht mit beiden von zwei gegenüberliegenden Hauptebenen der ersten Basismaterialschicht (2) in Kontakt kommt.

12. Die lumineszierende Folie nach irgendeinem der Ansprüche 1 - 11, wobei der spannungskonzentrierte Teil einen Bereich aufweist, in dem ein Spannungskonzentrationsfaktor α in Bezug auf die äußere Belastung 2 oder größer ist.

13. Ein Fälschungsverhinderndes Medium, das die lumineszierende Folie nach irgendeinem der Ansprüche 1 - 12 umfasst.

## Revendications

1. Feuille luminescente comprenant :
une première couche de matériau de base (2) ;
au moins l'un parmi des renfoncements (3) et des saillies (4) ayant chacun des bords et formés sur la première couche de matériau de base (2) ; et
des parties luminescentes de contrainte (3, 4) disposées chacune en un emplacement en contact avec le bord,
dans laquelle au moins une partie des bords comprend une partie concentrée en contrainte où la contrainte se concentre quand une contrainte est ajoutée à la première couche de matériau de base (2) dans une direction prédéterminée,
**caractérisée en ce que** la partie luminescente de contrainte (3, 4) est configurée pour émettre, autour du bord, une lumière particulièrement forte ayant une longueur d'onde prédéterminée avec une intensité de luminescence dépendant de la contrainte de charge externe ajoutée à la partie concentrée en contrainte et de la direction supposée de la contrainte de charge externe.

2. Feuille luminescente selon la revendication 1, dans laquelle la première couche de matériau de base (2) contient un matériau luminescent de contrainte, et
la partie luminescente de contrainte (3, 4) est disposée dans la première couche de matériau de base (2) .

3. Feuille luminescente selon la revendication 1 ou 2, dans laquelle au moins l'un des renfoncements (3) et des saillies (4) est creux.

4. Feuille luminescente selon la revendication 1 ou 2,
dans laquelle au moins l'un des renfoncements (3) et des saillies (4) est rempli d'un rembourrage contenant un matériau luminescent de contrainte, et
la partie luminescente de contrainte (3) est disposée dans le rembourrage.

5. Feuille luminescente selon l'une quelconque des revendications 1 à 4, comprenant en outre une deuxième couche de matériau de base (5) empilée sur la première couche de matériau de base (2),
dans laquelle la deuxième couche de matériau de base (5) contient un matériau luminescent de contrainte, et
la partie luminescente de contrainte (3, 4) est disposée dans la deuxième couche de matériau de base (5).

6. Feuille luminescente selon l'une quelconque des revendications 1 à 5,
dans laquelle au moins l'un des renfoncements (3) et des saillies (4) comprend une pluralité de plans ayant chacun une direction normale différente, et
le bord est une jonction de deux plans en contact mutuel parmi les plans.

7. Feuille luminescente selon l'une quelconque des revendications 1 à 6, dans lequel une surface en coupe transversale dans la direction d'un plan de la première couche de matériau de base (2) dans au moins l'un des renfoncements (3) et des saillies (4) change en continu ou progressivement dans une direction normale au plan de la première couche de matériau de base (2).

8. Feuille luminescente selon l'une quelconque des revendications 1 à 7,
dans laquelle le renfoncement (3) est disposé à partir d'un plan principal de la première couche de matériau de base (2) dans une direction de profondeur de la première couche de matériau de base (2), et
le renfoncement (3) a une taille radiale de 10 à 100 *µ*m sur le plan principal.

9. Feuille luminescente selon l'une quelconque des revendications 1 à 8, dans laquelle le renfoncement (3) est disposé à partir d'un plan principal de la première couche de matériau de base (2) sur une profondeur qui ne pénètre pas dans la première couche de matériau de base (2).

10. Feuille luminescente selon l'une quelconque des revendications 1 à 8, dans laquelle le renfoncement (3) est disposé de façon à pénétrer dans deux plans principaux se faisant face de la première couche de matériau de base (2).

11. Feuille luminescente selon l'une quelconque des revendications 1 à 8, dans laquelle le renfoncement (3) est disposé dans la première couche de matériau de base (2) de façon à ne pas être en contact avec les deux plans principaux se faisant face de la première couche de matériau de base (2).

12. Feuille luminescente selon l'une quelconque des revendications 1 à 11, dans laquelle la partie de contrainte concentrée a une région où le facteur de concentration de contrainte α par rapport à la charge externe est de 2 ou plus.

13. Milieu de prévention de contrefaçon comprenant la feuille luminescente de l'une quelconque des revendications 1 à 12.
